# EUROPEAN PATENT APPLICATION

(11) **EP 1 993 210 A1**
(43) Date of publication of application: **19.11.2008**
(21) Application number: 07290647.2
(22) Date of filing: 18.05.2007
(51) Int. Cl.: H04B 1/00

(54) **Transmitter and method for simultaneously transmitting plural signals**

(71) Applicant: Alcatel Lucent, 75008 Paris (FR)
(72) Inventor: Bitzer, Thomas, 73614 Schorndorf (DE); Pascht, Andreas, 73614 Schorndorf (DE)
(74) Representative: Richardt, Markus Albert

(57) **Abstract**

The present invention relates to a transmitter for simultaneously transmitting plural signals. The transmitter comprises at least two converters 10a and 10b. Each converter 10a and 10b is adapted to convert an input signal into an analogue output signal. Each of said analogue output signals has a particular carrier frequency A combiner 40 combines the analogue signals from the converters 10a and 10b. The combiner 40 receives the analogue signals and outputs a single combined analogue signal. An amplifier (20) receives the combined analogue signal and outputs an amplified analogue signal to an antenna.

## Description

### Field of the invention

The present invention relates to a transmitter and a method for simultaneously transmitting plural signals having different carrier frequencies, i.e. a multi carrier signal.

### Background and prior art

A transmitter is any object, which sends information to an observer (receiver). In particular, a transmitter is an electronic device which propagates an electromagnetic signal such as radio, television, or other Mobile Telephone Signal. For example, the global system for mobile communications (GSM) uses electromagnetic waves for transmitting information among cellular phones. GSM networks operate in different frequency bands. Most GSM networks operate in the 900 MHz and 1800 frequency bands. The 900 MHz band comprises an uplink band and a downlink band. The uplink band encompasses the bandwidth ranging from 890 to 915 MHz. The downlink band encompasses the bandwidth ranging from 935-960 MHz. Each 25MHz wide bandwidth is subdivided into 124 frequency channels each spaced 200 kHz apart.

The bandwidth of a frequency band or frequency channel is the range of frequencies occupied by a modulated carrier wave. As with any definition of the width of a function, many definitions are suitable for different purposes. A practically useful definition refers to the frequencies where the frequency is relatively small. Small could mean less than 3 dB below the maximum amplitude of the signal.

In general, information is encoded in a radio signal by modulating an information signal onto a signal having a fixed carrier frequency, the carrier signal. Therefore, a transmitter usually comprises an oscillator for providing the carrier signal and a modulator for modulating the information signal onto the carrier signal. The modulation used in GSM is Gaussian minimum shift keying (GSMK), which is a particular kind of continuous-phase frequency shift keying modulation. Frequency-shift keying is a frequency modulation technique, in which the modulating signal shifts the output frequency between two predetermined values representing 0 and 1. In GSMK, the binary encoded signal is filtered in such a way that the rectangular binary signal pulses are transformed into Gaussian-shaped signals. The frequency of the carrier signal is modulated using the Gaussian-shaped signal.

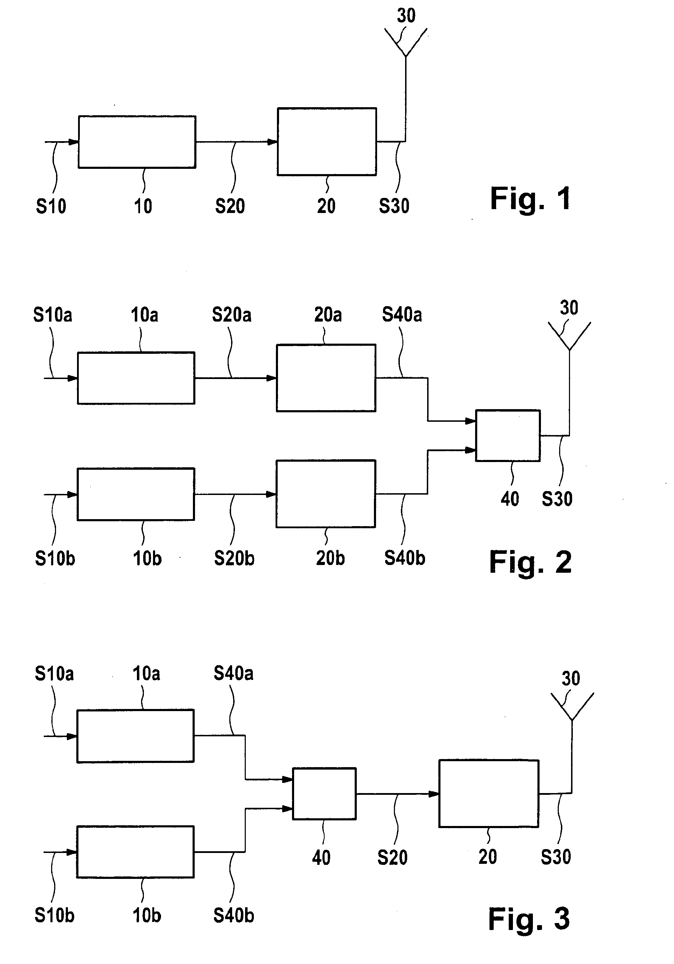

The appended figure 1 depicts the block diagram of a state of the art transmitter. The transmitter comprises a converter 10, a power amplifier 20 and an antenna 30.

A digital signal S10 is input to the converter 10, which outputs a corresponding analog signal S20. The converter generates an analogue modulated carrier signal S20, which is input to power amplifier 20. The information is encoded by modulating a carrier signal. Finally, the amplified analog signal S30 is provided to an antenna, which transforms the electronic signal into an electromagnetic wave.

Such a transmitter may be used in the base station of a mobile telephone system, such as GSM. In order to increase the channel capacity and flexibility of the base station, it is desirable to enable the base station to simultaneously transmit multiple modulated carrier signals, wherein the carrier frequencies are distributed in different frequency bands. The channel capacity is the amount of discrete information that can be reliably transmitted over a channel. The channel capacity of a given channel is the limiting information transport rate (in units of information per unit time) that can be achieved. However, the conventional transmitter of Figure 1 is not capable of transmitting a multi carrier signal, i.e. a signal composed of multiple signals having differing carrier frequencies. This is due to the fact that conventional power amplifiers are electronic transistors, which have a limited bandwidth. The bandwidth of an amplifier is usually defined as the difference between the lower and upper half power points. The half power point of an electronic amplifier is that frequency at which the output power has dropped to half of its mid-band level. This is therefore also known as the -3 dB Bandwidth. The bandwidth of the converter 10 is defined similarly.

Figure 2 discloses a block diagram of a conventional transmitter design, which is used for transmitting multiple carrier signals. Corresponding features in figures 1 and 2 have the same reference signs. Unlike figure 1, figure 2 comprises two converters 10a and 10b as well as two amplifiers 20a and 20b. The first converter 10a is connected to the first amplifier 20a. A digital signal S10a is input to the first converter. The converted analog signal S20a is input to the first amplifier 20a. The second converter and second amplifier 20b are connected in the same way to each other. The first and second converters 10a and 20a differ in that the first converter is adapted to output an analog signal having a carrier frequency in a first frequency band, in particular the GSM 900 MHz band, whereas the second converter 10 is adapted to perform in a second frequency band, in particular the GSM 1800 MHz band. Similarly, the first and second amplifiers 20a and 20b are adapted to operating in the first and second frequency bands, respectively. Consequently, the output signal S40a of the first amplifier 20a is an amplified modulated signal S40a having a carrier frequency within the first frequency band; the second amplifier's output signal S40b is an amplified modulated signal having a carrier frequency within the second frequency band.

Reference sign 40 depicts a combiner. The first and second signals S40a and S40b having differing carrier frequencies are input to the combiner. A combiner is a device that combines the radio frequency output of two or more radio amplifiers into a single output. Combiners must be carefully engineered: designed and tuned to prevent intermodulation and keep to a minimum for each input carrier frequency. While combiners can combine a relatively wide bandwidth, the major limitation comes with the antenna 30, which must be sufficiently wideband to accept all of the signals being passed through it, and transfer them to the air efficiently.

The conventional approach of providing plural converters and amplifiers for each frequency band is a rather inflexible solution. If for example a first amplifier for the GSM 900 MHz band is combined with a second amplifier for the GMS 1800 MHz band, then the transmitter may not be used for transmitting signals outside of the dedicated frequency bands. Furthermore, it is not possible to change the number of carriers per frequency band. Power consumtion of the transmitter is increased due to the increased number of active electronic devices. The combiner in general has a power loss of approximately 3 dB. This means that the output power of the combiner is half the input power. Therefore, the power efficiency of the transmitter is significantly decreased. Last but not least, the cost and size of the transmitter increases with the number of converters and amplifiers.

Therefore it is object of the present invention to provide a transmitter and a method for simultaneously transmitting plural signals in plural frequency bands, which are more flexible and provide a better power efficiency at a lower price.

### Summary of the invention

These and other objects of the present invention are solved basically by the transmitter according to the appended claim 1. The Transmitter according to the present invention comprises at least two converters, wherein each converter is adapted to convert an input signal into an analogue output signal, each of said analogue output signals having a particular carrier frequency. The transmitter further comprises a combiner for combining the analogue signals from the converters, wherein the combiner is adapted to receive the analogue signals and output a single combined analogue signal. Finally, the transmitter comprises an amplifier, said amplifier being adapted to receive the combined analogue signal and output an amplified analogue signal to an antenna.

The transmitter according to the present invention is more power efficient, since it requires less electronic components; a single amplifier 20 is provided instead of plural amplifiers. Furthermore, the combiner is adapted to combine the analogue output signals from the converters prior to amplification. Therefore, the power loss due to the combiner's intrinsic attenuation is reduced. With state of the art devices, the converters may be designed to operate in a wide frequency range. This means that there is no constraint limiting the frequency of the two carriers. The carriers may be generated in the same or in different frequency bands. The usage of two independent converters makes it possible to generate a multi carrier signal with a very high bandwidth.

Preferably, the bandwidth of the amplifier may be large enough for amplifying the multi carrier signal, i.e. the amplifier has a bandwidth, which encompasses the carrier frequency of each analogue output signal. Therefore, electronic transistor amplifiers are utilized, in particular a bipolar junction transistor or field effect transistor made out of Gallium Nitride, Indium Gallium Nitride, Indium Gallium Phosphide, Indium Phosphide, Gallium Arsenide or Aluminium Gallium Arsenide. The Indium Phosphide technologies provide the highest bandwidth amplifiers for radio frequency applications.

Preferably, the combiner is adapted to output a combined analogue signal, which represents the sum of the analogue signals output by the converters. Due to non-linearity in the consecutive electronic components, in particular the amplifier, the resulting signal frequency contains the frequencies of the input signals, which are called the fundamental frequencies, as well as a number of linear combinations of the fundamental frequencies. These additional frequencies are called intermodulation products. Therefore, a filter for filtering intermodulation products of the analogue output signals in the combined analogue signal is additionally provided. The filter is adapted to receive the combined analogue signal from the combiner or the amplified analogue signal from the amplifier. Preferably, the filter is provided between the combiner and the amplifier in order to increase the power efficiency of the transmitter.

Additionally, the signal input to the amplifier may be predistorted. This means that the signal distortion due to the non-linearity is compensated by distorting prior to inputting the combined signal input to the (non-linear) amplifier. Predistortion is a technique used to improve the linearity of radio transmitter amplifiers. Radio transmitter amplifiers in most telecommunications systems are required to be "linear", in that they must accurately reproduce the signal present at their input. Non-linearity causes the output signal to splatter onto adjacent radio frequencies. The predistortion circuit inversely models the amplifier's gain and phase characteristics and, when combined with the amplifier, produces an overall system that is more linear and reduces the amplifier's distortion. In essence, "inverse distortion" is introduced into the input of the amplifier, thereby cancelling any non-linearity the amplifier might have. Preferably, the amplifier output is input to the predistortion circuit as a reference in order to adapt to the amplifiers characteristics. If predistortion is performed prior to analogue-to-digital conversion, i.e. in the digital domain, then a large bandwidth analogue-to-digital converter must be implemented in the feedback path to the predistortion circuit. The bandwidth of the analogue-to-digital converter must encompass the intermodulation products of the amplified output signal.

### Brief description of the drawings

Subsequently, the preferred embodiment of the invention will be described in greater detail by making reference to the drawings in which:
- Figure 1: is a block diagram of a conventional radio transmitter.
- Figure 2: is a block diagram of a second conventional radio transmitter.
- Figure 3: is a block diagram of the transmitter according to the preferred embodiment of the present invention.

### Detailed description

The appended figure 1 depicts a block diagram of a state of the art transmitter. The transmitter comprises a converter 10, a power amplifier 20 and an antenna 30. A digital signal S10 is input to the converter 10, which outputs a corresponding analog signal S20. The converter generates an analogue modulated carrier signal S20, which is input to power amplifier 20. The information is encoded by modulating a carrier signal. Finally, the amplified analog signal S30 is provided to an antenna, which transforms the electronic signal into an electromagnetic wave.

Figure 2 discloses a block diagram of a conventional transmitter design, which is used for transmitting multiple carrier signals. Corresponding features in figures 1 and 2 have the same reference signs. Unlike figure1, figure 2 comprises two converters 10a and 10b as well as two amplifiers 20a and 20b. The first converter 10a is connected to the first amplifier 20a. A digital signal S10a is input to the first converter. The converted analog signal S20a is input to the first amplifier 20a. The second converter and second amplifier 20b are connected in the same way to each other. The first and second converters 10a and 20a differ in that the first converter is adapted to output an analog signal having a carrier frequency in a first frequency band, whereas the second converter 10 is adapted to perform in a second frequency band. Similarly, the first and second amplifiers 20a and 20b are adapted to operate in the first and second frequency bands, respectively. The output signal S40a of the first amplifier 20a is an amplified modulated signal S40a having a carrier frequency within the first frequency band; the second amplifier's output signal S40b is an amplified modulated signal having a carrier frequency within the second frequency band.

Reference sign 40 depicts a combiner. The first and second signals S40a and S40b having differing carrier frequencies are input to the combiner. A combiner is a device that combines the radio frequency output of two or more radio amplifiers into a single output.

The preferred embodiment of the present invention is depicted in Figure 3. The transmitter according to the preferred embodiment comprises two converters 10a and 10b. Each converter is adapted to generate an analogue frequency modulated output signal S40a and S40b respectively. Input signals S10a and S10b are input to the converters 10a and 10b, respectively. The input signals S10a and S10b represent the binary bit sequence, which is to be transmitted. Each converter transforms the digital input signals S10a and S10b into the analogue output signals S40a and S40b, respectively. The combiner 40 receives both analogue signals S40a and S40b from the converters 10a and 20b respectively. The combined output signal S20 from the combiner represents the sum of the input analogue signals 10a and 10b. The combined analogue signal S20 is input to the electronic power amplifier 20, which transfers the amplified output signal S30 to the antenna.

The amplifier 20 of the preferred embodiment is a semiconductor transistor amplifier, which is manufactured using the new GaN (Gallium Nitrite) technology. These transistor amplifiers have a large bandwidth of up to 1 GHz. The converters 10a have a smaller bandwidth, which is tailored to providing analogue signals having carrier frequencies in particular frequency bands such as the GSM frequency bands having a bandwidth equal to 25 MHz. Preferably, the bandwidths of the converters relate to non-overlapping frequency bands of the respective frequency channels for data transmission. The converters can be designed to operate in a wide frequency range. Therefore, there is no constraint limiting the frequency location of the two carrier signals. The signals may also be generated in the same frequency band. The usage of two independent converters allows generating a multi carrier signal with a very high bandwidth. The carriers may be situated in different frequency bands. Preferably, the converters support the generation of multi carrier signals. Therefore, multiple carrier signals within one frequency band may be transmitted. It is apparent that the number of converters may be chosen according to the particular needs of the application. The number and bandwidth of the converters may be chosen such that any carrier frequency within the bandwidth of the amplifier may be transmitted.

It is apparent to the skilled person that numerous modifications and implementations of the present invention are feasible, which is defined by the appended claims.

### List of reference numerals

- 10: Digital-to-analogue converter
- 10a: First Digital-to-analogue converter
- 10b: Second Digital-to-analogue converter
- 20: Power Amplifier
- 20a: First Power Amplifier
- 20b: Second Power Amplifier
- 30: Antenna
- 40: Combiner
- S10: Digital Signal input to digital-to-analogue converter 10
- S10a: Digital Signal input to digital-to-analogue converter 10a
- S10b: Digital Signal input to digital-to-analogue converter 10b
- S20: Analogue Signal input to power amplifier 20
- S20a: Analogue Signal input to power amplifier 20a
- S20b: Analogue Signal input to power amplifier 20b
- S30: Amplified Signal input to antenna 30
- S40a: First analogue Signal input to combiner 40
- S40b: Second analogue signal input to combiner 40.

## Claims

1. Transmitter for simultaneously transmitting plural signals, said transmitter comprising
- at least two converters (10a, 10b), wherein each converter (10a, 10b) is adapted to convert an input signal into an analogue output signal, each of said analogue output signals having a particular carrier frequency;
- a combiner (40) for combining the analogue signals from the converters (10a, 10b), wherein the combiner (40) is adapted to receive the analogue signals and output a single combined analogue signal; and
- an amplifier (20), said amplifier (20) being adapted to receive the combined analogue signal and output an amplified analogue signal to an antenna (30).

2. Transmitter for simultaneously transmitting plural signals according to claim 1, wherein each converter (10a, 10b) is adapted to output the particular analogue signal having the particular carrier frequency, wherein the carrier frequency of each analogue signal lies in a particular frequency band.

3. Transmitter for simultaneously transmitting plural signals according to claim 1, wherein the amplifier (20) has a bandwidth, which encompasses the carrier frequency of each analogue output signal.

4. Transmitter for simultaneously transmitting plural signals according to claim 1 wherein the amplifier (20) is an electronic transistor amplifier (20), in particular a bipolar junction transistor or field effect transistor made out of Gallium Nitride, Indium Gallium Nitride, Indium Gallium Phosphide, Indium Phosphide, Gallium Arsenide or Alluminum Gallium Arsenide.

5. Transmitter for simultaneously transmitting plural signals according to claim 1, wherein the combiner (40) is adapted to output the combined analogue signal, said combined analogue signal representing the sum of the analogue signals output by the converters (10a, 10b).

6. Transmitter according to claim1, wherein at least one of the converters (1 0a, 10b) is adapted to output an analogue output signal having plural carrier frequencies.

7. Transmitter according to claim 1, further comprising
- A filter for filtering intermodulation products of the analogue output signals in the combined analogue signal, wherein said filter is adapted to receive the combined analogue signal from the combiner (40) or the amplified analogue signal from the amplifier (20).

8. Method for simultaneously transmitting plural signals, said method comprising the steps
- Converting a plurality of input signals into analogue output signals, wherein each of said analogue output signals has a particular carrier frequency;
- Combining the analogue signals such that a single combined analogue signal is output; and
- an amplifying the combined analogue signal and outputting the amplified analogue signal to an antenna.

9. Method for simultaneously transmitting plural signals according to claim 7, wherein the step of converting is adapted to output the particular analogue signals having the particular carrier frequency, wherein the carrier frequency of each analogue signal lies in a particular frequency band.

10. Method for simultaneously transmitting plural signals according to claim 7, wherein the step of amplifying uses an amplifier (20) having a bandwidth, which encompasses the carrier frequency of each analogue output signal.

11. Method for simultaneously transmitting plural signals according to claim 7, wherein the step of amplifying uses an electronic transistor amplifier (20), in particular a bipolar junction transistor or field effect transistor made out of Gallium Nitride, Indium Gallium Nitride, Indium Gallium Phosphide, Indium Phosphide, Gallium Arsenide or Aluminium Gallium Arsenide.

12. Method for simultaneously transmitting plural signals according to claim 7, wherein the step of combining outputs the combined analogue signal, said combined analogue signal representing the sum of the analogue signals output in the converting step.

13. Method for simultaneously transmitting plural signals according to claim 7, further comprising the step of:
- Filtering intermodulation products of the analogue output signals in the combined analogue signal, wherein the combined analogue signal from the combiner (40) or the amplified analogue signal from the amplifier (20) is filtered.
